(19) Europäisches Patentamt
European Patent Office
Office européen des brevets

(11) EP 2 058 217 B1

(12) FASCICULE DE BREVET EUROPEEN

(45) Date de publication et mention de la délivrance du brevet:
**29.05.2013 Bulletin 2013/22**

(51) Int Cl.:
**B62K 21/02** *(2006.01)*  **B62K 25/02** *(2006.01)*

(21) Numéro de dépôt: **08019221.4**

(22) Date de dépôt: **03.11.2008**

(54) **Dispositif de réglage de l'angle de chasse du train avant d'un cycle et roue équipée d'un tel dispositif**

Vorrichtung zum Regeln des Nachlaufwinkels der Vorderachse eines Rads und mit einer solchen Vorrichtung ausgestattetes Rad

Device for adjusting the castor angle of the front wheel of a cycle and wheel with such a device

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.11.2007 FR 0707847**

(43) Date de publication de la demande:
**13.05.2009 Bulletin 2009/20**

(73) Titulaire: **MAVIC S.A.S.**
**74370 Metz-Tessy (FR)**

(72) Inventeur: **Mercat, Jean-Pierre**
**74650 Chavanod (FR)**

(56) Documents cités:
**EP-A- 0 941 916**   **WO-A-2006/056869**
**DE-A1- 4 126 761**   **FR-A- 2 744 980**
**US-B1- 6 474 432**

**Description**

L'invention se rapporte au domaine du cycle, en particulier du vélo, et notamment à un perfectionnement permettant le réglage de l'angle de chasse de la roue avant d'un cycle tel qu'un vélo.

Dans le domaine du vélo en particulier, certains pratiquants éprouvent le besoin de pouvoir régler certains paramètres géométriques du cycle affectant la position sur le vélo et/ou le comportement de celui-ci dans différentes conditions. Si certains paramètres peuvent être habituellement réglés de manière triviale comme la hauteur de selle, du guidon etc., pour d'autres paramètres, ce réglage est généralement impossible, compliqué ou difficile sans un outillage spécial.

En particulier, la position relative de la direction par rapport à la roue avant influence considérablement le comportement dynamique du vélo. Certains paramètres importants qui influencent cette position comprennent en particulier l'angle de chasse et la chasse.

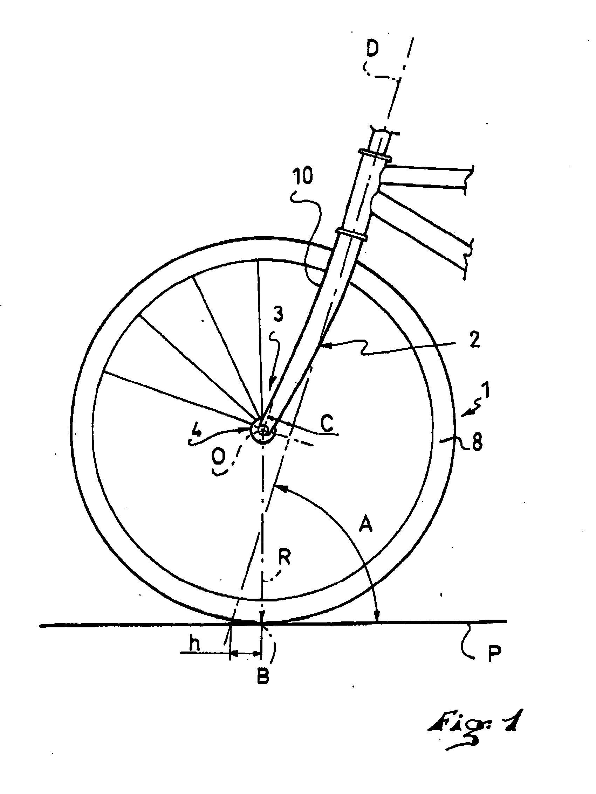

La figure 1 montre une roue avant montée sur une fourche et en appui sur le sol « P ». L'angle de chasse correspond à l'angle « A » représentant l'angle entre l'axe de direction « D » et le plan au sol «P». La chasse « h » correspond à la distance mesurée sur un plan horizontal au sol « P » entre l'axe de direction «D» et le point de contact «B» sur le plan au sol « P » de la roue. Le cintre « C » correspond à la distance entre l'axe « O » du moyeu et l'axe de direction « D ». Tous ces paramètres sont interdépendants et ont une influence sur le comportement dynamique du vélo.

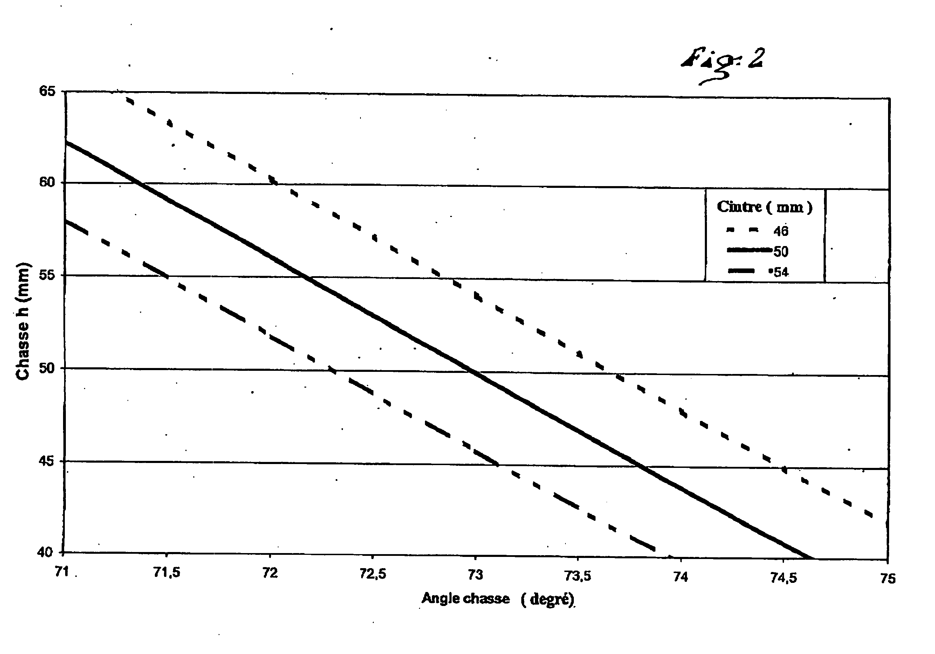

La figure 2 montre un graphe de l'évolution de la chasse en fonction de l'angle de chasse pour différentes valeurs de cintre, respectivement, 46, 50 et 54 mm. La relation entre l'angle de chasse et la chasse est la suivante :

$$h = (R.\cos.(A) - C)/\sin.(A)$$

Le graphe montre qu'un écart faible de l'angle de chasse induit un déplacement relativement important de la chasse. A titre d'exemple, une variation de 1 degré de l'angle de chasse induit un écart de l'ordre de 6 mm de la chasse au sol.

D'un point de vue du comportement du vélo, l'angle de chasse ou la chasse influence de manière significative la stabilité du vélo. En particulier, une chasse faible peut se traduire, par exemple, par une moins grande amplitude de louvoiement lors de la conduite en « danseuse » du vélo. Ceci s'explique physiquement par une réduction du moment autour de l'axe de direction engendré par l'effort latéral au point de contact au sol du vélo. Une faible chasse produit une sensation de plus grande légèreté et de plus grande maniabilité mais, en contrepartie cela conduit à une plus grande sensibilité; ce qui génère des changements possibles de direction ou de cap brutaux et involontaires et cela demande donc de la part du coureur une plus grande vigilance lors de la conduite.

D'autre part, dans certaines conditions aérodynamiques, il peut être avantageux d'augmenter la chasse afin de réduire le moment latéral et, par conséquent, réduire le louvoiement du vélo. Au contraire, si la chasse est faible, le vélo va avoir tendance à subir fortement les effets d'un moment latéral provoqué par un vent latéral et sa stabilité en sera ainsi affectée.

Enfin, le contrôle de l'angle de chasse est difficile lors de la fabrication du vélo en raison des tolérances de fabrication. Or, comme le montre le graphe de la figure 2, un faible écart de l'angle de chasse affecte de manière importante la chasse et par conséquent le comportement dynamique du vélo. Aussi, il est important de pouvoir ajuster la chasse pour compenser les écarts dus aux tolérances de fabrication.

Par conséquent, il existe un besoin pour pouvoir régler facilement et efficacement ces paramètres liés à la position relative de la direction et de la roue au sol, soit par exemple, en fonction des conditions d'utilisation, soit afin de compenser les tolérances de fabrications.

Certains documents de l'art antérieur ont proposé des solutions dans le domaine de la motocyclette. Ces solutions de réglage sont assez compliquées à mettre en oeuvre. Par exemple, la demande FR 2 880 609 concerne un perfectionnement d'un dispositif à angle de chasse réglable d'une motocyclette qui utilise un principe d'excentrique pour régler l'angle de chasse au niveau de la tige de direction. Un inconvénient de cette solution est qu'elle oblige une intervention au niveau de la direction qui est assez délicate à réaliser et qui nécessite un outillage particulier.

La demande de brevet DE 102 29 740 se rapporte à une construction de train avant de motocyclette dans lequel le système de freinage et l'axe de roue sont réglables par deux moyens d'excentrique. Ce système est complexe et demande un contrôle angulaire du réglage entre les freins et la roue qui n'est pas évident à réaliser.

D'autres systèmes de réglage d'un axe de roue avec excentrique existent comme, par exemple, un axe commercialisé sous la marque « e-axle ®» vendu par la société Rekluse Motor Sports. Comme pour le dispositif précédent, un tel système est compliqué à régler précisément.

La demande de brevet internationale WO 2006/056869 concerne une méthode et un dispositif pour une roue avant d'un véhicule comme une motocyclette selon le préambule de la revendication 1, qui comprend un ajustement de la position de l'axe de la roue par rapport au support de fourche au moyen d'un moyen de garniture prenant place dans une ouverture de la fourche et comprenant un siège disposé dans une position déterminée par rapport à l'ouverture de la fourche de façon à recevoir l'une des extrémités d'une goupille de rotation de l'axe de roue de telle façon que le siège de la garniture assume une position relative déterminée, sélectivement ajustable, par rapport à la fourche de façon à régler la position de la goupille de rotation par rapport à la fourche. Toutefois, un tel système de réglage est compliqué à mettre en oeuvre pour un vélo. Un autre inconvénient provient de ce qu'une garniture est interposée entre l'ouverture de la fourche et la goupille de rotation de l'axe qui elle-même prend place dans l'ouverture. La goupille exerce donc des efforts sur la garniture au niveau du siège ; ce qui peut provoquer une usure et des jeux au niveau de l'axe de fourche.

L'invention vise, entre autre, à résoudre les problèmes rencontrés dans les dispositifs de l'art antérieurs. En particulier, l'invention vise à proposer une solution à la fois facile à mettre en oeuvre et fiable pour permettre de modifier les caractéristiques liées à la chasse d'un cycle.

Dans un aspect de l'invention, le dispositif de réglage de la chasse du train avant d'un cycle comprend un moyeu pour une roue ; ledit moyeu étant adapté à recevoir des moyens de serrage de la roue sur une fourche du cycle et un moyen intercalaire de réglage de la position de l'entraxe de la fourche par rapport à l'axe transversal du moyeu.

Le moyen intercalaire de réglage forme une partie du moyeu qui prolonge axialement le moyeu et est configuré pour s'engager avec une portion de la fourche du cycle de telle manière à assurer à la fois le support de fourche et un positionnement prédéterminé de la position dudit axe transversal du moyeu par rapport à l'entraxe de ladite fourche. Ainsi, le moyen intercalaire de réglage possède deux fonctions essentielles ; l'une étant de prolonger le moyeu afin de supporter les efforts d'appui de la fourche sur le moyeu ; l'autre étant de définir une position prédéterminée de l'entraxe de la fourche par rapport à l'axe transversal du moyeu ; laquelle position détermine la position de la chasse ou de l'angle de chasse du cycle.

Selon un mode de l'invention, le moyen intercalaire est configuré de manière à définir une position décalée ou alignée prédéterminée dudit axe transversal du moyeu par rapport à l'entraxe de ladite fourche. Ainsi, selon le choix du moyen intercalaire de réglage sélectionné, il est possible de faire varier la position de la chasse.

En particulier, le moyen intercalaire se présente sous la forme d'au moins un insert qui est détachable par rapport au moyeu. Il est aussi interchangeable par rapport au moyeu de manière à permettre de sélectionner un insert parmi diférents inserts dont les caractéristiques de réglage sont différentes. Une telle solution a pour avantage d'éviter les opérations de réglage sur la roue ou l'axe du moyeu qui réclament habituellement un outillage adapté tels que des clés, des pinces ou autres.

Selon une caractéristique, l'insert comprend une portion de support de fourche contre laquelle s'engage une portion d'ouverture de la fourche. Ainsi, l'insert est adapté à faire l'interface entre la fourche et le moyeu et supporter les efforts transmis entre la fourche et la roue. Il est en particulier configuré, à la fois, pour prolonger l'axe du moyeu et, à la fois, pour créer un décalage entre l'axe du moyeu et l'entre-axe de la fourche.

Selon une caractéristique de l'invention, le moyen intercalaire de réglage comprend au moins deux inserts qui prolongent axialement chaque côté du moyeu ; les inserts étant' configurés pour s'engager chacun avec une portion de fourche. Chaque insert est aussi configuré, en opération sur le moyeu, pour définir un positionnement prédéterminé de la position dudit axe transversal du moyeu par rapport à l'entraxe de ladite fourche. L'engagement de chaque insert avec la fourche peut se faire par une portion en relief de support de l'insert qui s'engage dans une ouverture de la fourche, ou inversement, par une portion en relief de la fourche qui s'engage dans une ouverture ménagée dans l'insert.

Selon une autre caractéristique, le moyen intercalaire de réglage comprend un jeu d'au moins deux paires différentes d'inserts dont les caractéristiques de position de l'axe transversal du moyeu par rapport à l'entraxe de ladite fourche sont différentes d'une paire par rapport à l'autre. Ainsi, il est facile de modifier le réglage de la chasse par un simple changement de paire des inserts sur le moyeu. En particulier, le dispositif comprend au moins deux paires d'inserts dans le jeu qui sont configurés avec un décalage dont l'écart et/ou la direction du décalage varie d'une paire à l'autre.

Dans une variante possible, le dispositif comprend

a. au moins une première paire d'inserts possédant un décalage dudit axe transversal du moyeu par rapport à l'entraxe de ladite fourche et,
b. au moins une paire d'inserts possédant un axe transversal du moyeu qui est aligné par rapport à l'entraxe de ladite fourche.

Selon une caractéristique de l'invention, chaque insert comprend une portion de connexion tubulaire adaptée à s'insérer complémentairement et de manière coaxiale et amovible dans une portion tubulaire axiale du moyeu. Selon un mode, la connexion entre l'insert et le moyeu est un simple emboitement. L'emboitement peut être un emboitement par friction. On peut aussi envisager d'autres types de connexion comme, par exemple, un vissage ou un emboitement du type à baïonnette. En tout cas, la connexion est, de préférence, simple de façon à pouvoir facilement retirer l'insert et pouvoir le remplacer par un autre insert aux caractéristiques de réglage de chasse différentes.

Par exemple, la portion tubulaire comprend des premiers moyens de référencement angulaire par rapport au moyeu. Ces moyens de référencement angulaires permettent de faciliter le positionnement de l'insert dans un nombre limité de positions angulaires choisies par rapport au moyeu. Par exemple, les moyens de référencement angulaires comprennent au moins une portion de méplat qui s'engage complémentairement dans une portion de méplat de la portion tubulaire de réception du corps du moyeu.

Selon une autre caractéristique, les portions de support de fourche, que comprend l'insert, sont munies de surfaces de support et d'arrêt en rotation du bras de fourche. En particulier, les surfaces de support et d'arrêt en rotation sont configurées pour positionner l'entraxe de fourche de manière désaxée par rapport à l'axe de la portion de connexion tubulaire de l'insert. Ainsi, chaque insert peut comprendre un épaulement adapté pour supporter les surfaces ouvertes d'un brin de fourche. L'épaulement peut comprendre, par exemple, des portions de surfaces de guidage rectilignes.

Ces surfaces d'arrêt en rotation de l'insert sont nécessaires en raison du décalage entre l'axe du moyeu et l'entraxe de fourche sur l'insert; décalage qui crée un couple de torsion qu'il est nécessaire de supporter entre l'insert et la fourche afin d'éviter la rotation de l'insert. Ces surfaces d'arrêt servent aussi à orienter convenablement l'insert par rapport à la fourche et par rapport à un insert positionné sur le second bras de fourche.

L'insert est ainsi bloqué dans la direction de l'axe transversal du moyeu par les moyens habituels de serrage de la fourche sur la roue. Par exemple, les moyens de serrage comprennent, comme connu en soi, un tirant comprenant à une extrémité, un écrou de butée et, à l'autre extrémité, un dispositif de blocage rapide ou un écrou de serrage.

Selon une caractéristique alternative de l'invention, les surfaces de support et d'arrêt en rotation sont configurées pour positionner l'entraxe de fourche de manière alignée par rapport à l'axe de la portion de connexion tubulaire de l'insert. Dans ce cas, étant donné l'absence de décalage et donc l'absence de couple, les surfaces de support et d'arrêt en rotation peuvent simplement comprendre une portion de surface de guidage tubulaire.

Selon une autre caractéristique de l'invention, chaque insert est traversé par un trou permettant le passage d'un axe de serrage de la roue sur la fourche. Le trou peut être réalisé sur l'épaulement de l'insert ; Il peut être centré ou, au contraire, décentré par rapport à cet épaulement. Ainsi, le trou permettant le passage de l'axe de serrage ou « tirant » de la roue sur la fourche peut être excentré par rapport à l'entre-axe de la fourche.

L'invention se rapporte aussi à une roue avant de cycle qui comprend un dispositif tel que décrit précédemment.

L'invention se rapporte aussi à une méthode de réglage de la chasse du train avant d'un cycle par un dispositif de réglage comprenant un moyeu pour une roue ; ledit moyeu étant adapté à recevoir des moyens de serrage de la roue sur une fourche du cycle et des moyens de positionnement de l'entraxe et de support de ladite fourche par rapport à l'axe transversal du moyeu. La méthode consiste à connecter sur le corps du moyeu un moyen intercalaire de réglage qui prolonge axialement le moyeu et est configuré pour s'engager dans une ouverture de la fourche de telle manière à assurer à la fois le support de fourche et un positionnement prédéterminé de la position dudit axe transversal du moyeu par rapport à l'entraxe de ladite fourche.

En particulier, la méthode consiste à choisir ce moyen intercalaire de réglage dans un jeu comprenant plusieurs paires d'inserts détachables et interchangeables par rapport au corps du moyeu et ayant des positions différentes du réglage dudit axe transversal du moyeu par rapport à l'entraxe de ladite fourche desdits moyens de positionnement et de support, puis à associer la paire choisie avec un insert de part et d'autre du moyeu.

D'autres caractéristiques et avantages de l'invention seront mieux compris en relation avec les dessins qui suivent pour lesquels :

> La figure 1 est une vue schématique d'un train avant d'un cycle.
> La figure 2 est un graphe montrant l'évolution de la chasse (en mm) en fonction de l'angle de chasse (en degrés) pour des valeurs de cintre différentes.
> La figure 3 est une vue en perspective d'un dispositif selon l'invention monté sur une roue.
> La figure 4 est une vue en perspective éclatée d'un dispositif selon l'invention.
> La figure 5 est une vue de côté du dispositif des figures 3 et 4.
> La figure 6 est une vue de dessus et en coupe partielle selon le plan B de la figure 5.
> La figure 7 est une vue d'un insert du côté interne.
> La figure 8 est une vue de côté du dispositif de l'invention monté sur la roue dans une seconde position.
> La figure 9 est une vue de côté du dispositif avec un insert dont la portion de support de fourche est alignée avec l'axe de la roue.

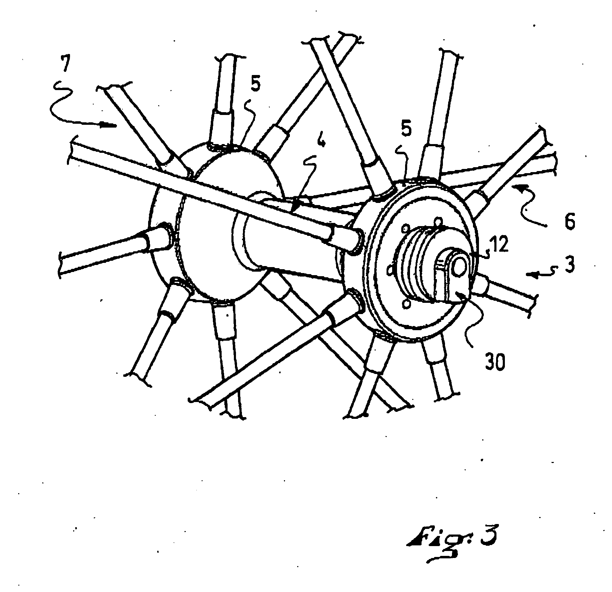

Comme le montrent les figures 1 à 5, l'invention se rapporte à un dispositif de réglage 3 de la chasse «h»; lesquels paramètres ont été définis précédemment en rapport avec la figure 1. Le dispositif est monté sur un moyeu 4 qui s'étend selon un axe transversal O. Le moyeu comprend sur les côtés deux flasques latéraux 5 pour recevoir chacun une nappe 6, 7 de rayons. Chaque nappe de rayons est montée respectivement, aux flasques et à la jante 8. Les rayons sont montés en tension entre le moyeu et la jante et apportent ainsi, comme connu en soi, la rigidité à la roue dans des conditions statiques mais aussi dans des conditions dynamiques de roulage. Il faut noter que le dispositif peut s'adapter préférablement à une fourche possédant deux bras qui prennent position de chaque côté de la roue 1. Toutefois, le dispositif est envisageable pour un cycle ne possédant éventuellement qu'un seul bras de fourche disposé sur un seul côté de la roue.

Le dispositif de l'invention est basé sur le principe de pouvoir régler facilement les caractéristiques de positionnement de l'axe transversal O du moyeu par rapport à l'entraxe de la fourche L L'axe transversal du moyeu peut être défini par l'axe transversal médian O passant par le centre des roulements du moyeu. L'entraxe de fourche peut être défini comme étant sensiblement l'axe I passant par le centre de l'ouverture du bras de fourche. Dans un montage habituel, l'axe transversal O du moyeu et l'entraxe I de la fourche sont confondus. Toutefois, un déplacement relatif des deux axes entre eux a pour effet de faire varier directement les paramètres relatifs à la chasse du cycle. Ainsi selon un principe de l'invention, des moyens de réglage 30 sont prévus pour affecter le positionnement relatif de ces deux axes O et I de telle manière à faire varier la chasse.

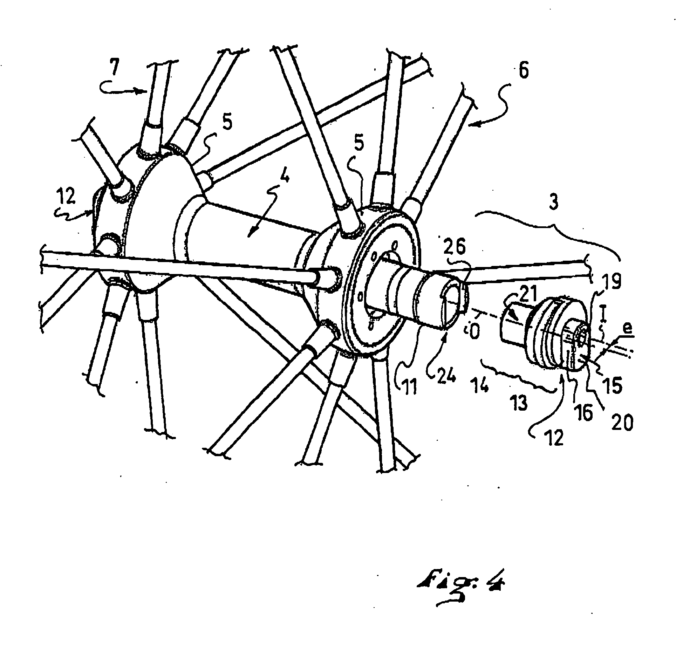

Comme le montre la figure 4, le moyen de réglage est basé sur le principe de connecter au moins un insert 12 détachable et interchangeable sur au moins un côté du moyeu 4, en particulier une portion d'arbre libre 11 du moyeu. Dans une configuration à deux bras de fourche, deux inserts sont nécessaires ; chacun d'eux prolongeant l'axe de chaque côté du moyeu. L'insert 12 forme une partie détachable du moyeu qui le prolonge axialement, vers l'extérieur et au-delà des flasques. Le terme « prolonger » est à prendre au sens large et n'est pas restrictif en terme de longueur. Il ne signifie pas nécessairement que le moyeu et les inserts forment un entre-axe plus large qu'un moyeu traditionnel. En principe, le dispositif selon l'invention peut s'appliquer sur tout type standard de fourche de cycle ou, au contraire, sur des fourches aux dimensions particulières.

Ainsi, l'insert comprend une partie externe 13 tournée du côté de la fourche et une partie interne 14 tournée du côté du moyeu. La partie externe comprend au moins une portion de support de fourche 15 en relief configurée pour recevoir l'appui d'un brin 10 de fourche. Cette portion comprend des surfaces d'arrêt en rotation et de support de fourche sous la forme, par exemple, d'un épaulement 16. Les surfaces de l'épaulement possèdent des portions de surface rectilignes 17, 18 parallèles entre elles, configurées de telle façon à s'engager complémentairement dans l'ouverture 9 en forme de U du brin de fourche. Entre la partie interne et la partie externe, l'insert est traversé par un trou 19 d'axe « T », permettant le passage d'un tirant ou « axe » du dispositif de serrage de la roue sur la fourche (non représenté). Le trou est placé sur la surface frontale 20 de la portion de support 15. Il peut être centré ou décentré par rapport aux surfaces rectilignes 17, 18. Ainsi, l'axe T peut être aligné ou au contraire excentré par rapport à l'entre-axe I de la fourche. L'excentration maximale de l'axe T du trou est essentiellement fonction du diamètre du roulement du moyeu.

Sur sa partie interne 14, l'insert comprend des moyens de raccordement 21 amovibles avec une portion terminale tubulaire 22 du moyeu. Ce moyen de raccordement forme ici une portion de connexion tubulaire 23 qui s'adapte complémentairement à la portion terminale tubulaire 22 du moyeu. Par exemple, la portion tubulaire 23 de l'insert possède un diamètre inférieur au diamètre de la portion tubulaire 22 du moyeu de sorte qu'elle s'insère à l'intérieur de la portion tubulaire 22 de manière libre au montage en coulissement. Bien entendu, une configuration inverse de la portion 22 s'insérant à l'intérieur de la portion 23 est aussi envisageable. On peut aussi envisager des moyens de connexion du type à vis ou à baïonnette, par exemple, entre la portion tubulaire de l'insert 23 et la portion tubulaire 22 du moyeu.

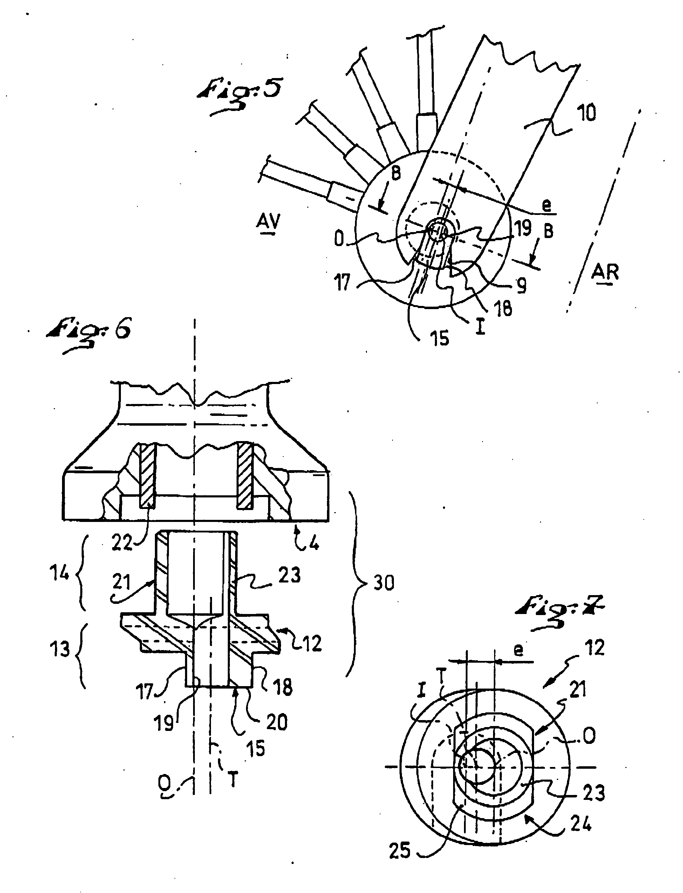

Comme le montrent les figures 4 et 7, les moyens de référencement angulaire 24 peuvent être utiles pour placer l'insert dans une position angulaire prédéterminée par rapport au moyeu, notamment, pour permettre d'assurer un positionnement correct de la partie externe et de son épaulement vis-à-vis de la fourche. Ces moyens de référencement 24 peuvent comprendre une paire de méplats 25 à la base de la portion de connexion tubulaire 23 qui s'engage complémentairement dans une portion de méplat 26 de la portion terminale du moyeu. En engagement et après serrage du dispositif par les moyens de serrage, ces portions de méplat interdisent la rotation de l'insert par rapport au moyeu et orientent ainsi correctement l'insert vis-à-vis de l'ouverture de la fourche ainsi qu'ils permettent l'indexation des inserts droit et gauche.

Comme le montre la figure 5, l'épaulement est sensiblement décalé vers l'arrière (AR) par rapport à la portion tubulaire interne 23 située sur la partie interne de l'insert. Ce décalage a pour effet de décaler l'entre-axe I de la fourche qui prend place sur l'épaulément par rapport à l'axe O du moyeu qui est coaxial par rapport à ladite portion 23. Sur l'exemple illustré, le décalage est matérialisé par un écart « e » avec une position de l'axe O du moyeu en avant de l'entre-axe I de la fourche. Un axe de roue ou moyeu O disposé plus en avant d'un certain écart « e » par rapport à une configuration centrée a pour effet de déplacer le contact au sol vers l'avant et donc de réduire la chasse « h » (figure 1). L'écart « e » peut être de l'ordre de 1 à 10 mm environ.

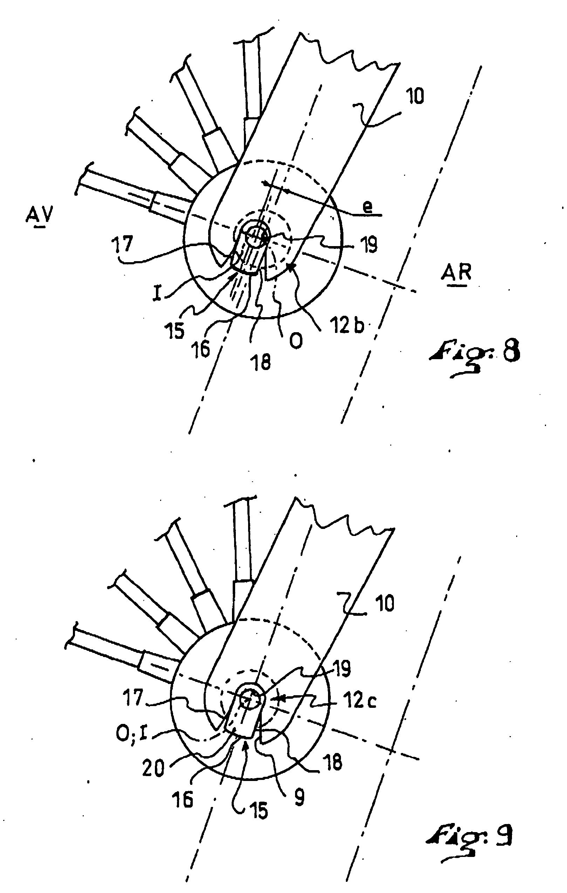

La figure 8 montre une configuration de chasse augmentée obtenue par une paire d'inserts 12b ayant des caractéristiques de décalage différentes des inserts 12 du mode de réalisation précédent. Ces caractéristiques peuvent être obtenues, par exemple, simplement par une inversion des inserts 12b gauche/droit sur le moyeu ou encore par de nouveaux inserts ou en retournant la roue si la roue est symétrique. Dans ce cas, le décalage de l'épaulement se fait vers l'avant par rapport à la portion tubulaire interne 23. Dans ce cas, l'axe de roue O est reculé d'un certain écart « e » par rapport à l'entre-axe I de la fourche ; ce qui a pour effet de reculer le point de contact B au sol et donc d'augmenter la chasse « h » dans le rapport e/SinA. (Figure 1).

Ainsi, la chasse peut être réduite ou inversement augmentée avec une même paire d'inserts, simplement en inversant le montage des inserts sur les deux portions libres d'arbre du moyeu. Ainsi, selon un avantage de l'invention, une même paire d'inserts offre deux positions de réglage possibles selon le montage des inserts sur le moyeu de la roue.

Dans la configuration de la figure 9, les deux inserts 12c de chaque côté du moyeu sont configurés de telle manière que l'axe médian O de la portion de support de fourche 15 est aligné par rapport à l'axe transversal de la portion tubulaire 23 correspondant à la direction axiale I du moyeu. La portion de support de l'insert 12c peut être un épaulement 16 comprenant des portions de surfaces rectilignes de guidage 17, 18 parallèles entre elles comme il est illustré. Toutefois, une portion de surface de guidage tubulaire ou cylindrique peut être envisagée puisque du fait de l'alignement, il n'y a pas de couple de torsion qui soit généré au niveau de l'épaulement.

Les portions de surfaces de guidage 17, 18 peuvent aussi être non parallèles mais avoir aussi un profil évasé vers le bas complémentaire du profil de l'ouverture 9 du brin 10 de fourche.

Le trou traversant 19 de l'insert peut se trouver centré par rapport à la surface frontale 20 de l'épaulement comme illustré ou encore être décalé sur cette surface. Ce trou sert au passage de l'axe ou tirant du dispositif de serrage de la roue, en particulier, du brin de fourche sur le moyeu. Le serrage s'applique de manière transversale dans la direction d'axe I du brin de fourche 10 contre l'insert 12. L'insert est donc intercalé entre la portion d'arbre 11 du moyeu et le brin de fourche. Un tel dispositif de serrage est connu en tant que tel et n'a pas besoin d'être décrit en détail dans la présente demande.

Bien entendu, les caractéristiques de décalage propres aux inserts peuvent être adaptées en fonction du réglage de chasse désiré. Ainsi, la direction du décalage des axes ainsi que l'écart entre les axes peuvent varier d'une paire d'inserts à une autre paire d'insert de façon à offrir un large choix de réglage à l'utilisateur. Le dispositif de l'invention offre une méthode facile et fiable pour le réglage de la chasse d'un cycle ne nécessitant pas un outillage particulier.

Selon un principe général, la méthode consiste à choisir une paire d'inserts dans un jeu comprenant plusieurs paires d'inserts détachables et interchangeables par rapport au corps du moyeu et ayant des positions différentes du réglage dudit axe transversal du moyeu par rapport à l'entraxe de ladite fourche desdits moyens de positionnement et de support, puis à associer la paire choisie avec un insert de part et d'autre du moyeu. La méthode comprend aussi le choix de modifier le réglage dudit axe transversal du moyeu par rapport à l'entraxe de la fourche en inversant l'engagement des inserts sur la fourche.

Chaque paire d'inserts peut comprendre une indication visuelle indiquant le degré d'excentration, par exemple, le déport en millimètre entre l'axe O et l'axe I. Cette indication visuelle peut être un code couleur ou un marquage numérique par example.

Bien entendu, l'invention n'est pas limitée aux modes de réalisation décrits et illustrés mais peut comprendre d'autres modes équivalents. En particulier, on peut envisager un réglage par des moyens intercalaires faisant partie du brin de fourche plutôt que du moyeu. Dans ce cas, les inserts peuvent être montés sur la fourche par tout moyen de connexion amovible tel que par vissage ou clipsage.

## Revendications

1. Dispositif de réglage (3) de la chasse du train avant d'un cycle comprenant un moyeu (4) pour une roue (1) ; ledit moyeu étant adapté à recevoir des moyens de serrage de la roue sur une fourche du cycle et un moyen intercalaire de réglage (30) de la position de l'entraxe (I) de la fourche par rapport à l'axe transversal (O) du moyeu **caractérisé en ce que** ledit moyen intercalaire de réglage (30) forme une partie du moyeu (4) qui le prolonge axialement et est configuré pour s'engager avec une portion (10) de la fourche du cycle de telle manière à assurer à la fois le support de fourche et un positionnement prédéterminé de la position dudit axe transversal (O) du moyeu par rapport à l'entraxe (I) de ladite fourche.

2. Dispositif selon la revendication 1, **caractérisé en ce que** ledit moyen intercalaire (30) est configuré de manière à définir une position décalée ou alignée prédéterminée dudit axe transversal (O) du moyeu par rapport à l'entraxe (I) de ladite fourche.

3. Dispositif selon la revendication 2, **caractérisé en ce que** ledit moyen intercalaire (30) comprend au moins un insert (12) qui est détachable et interchangeable par rapport au moyeu (4).

4. Dispositif selon la revendication 3, **caractérisé en ce que** ledit insert (12) comprend une portion de support (15) de fourche contre laquelle s'engage une portion d'ouverture (9) de la fourche.

5. Dispositif selon l'une quelconque des revendications précédentes, **caractérisé en ce que** ledit moyen intercalaire de réglage (30) comprend un jeu d'au moins deux paires différentes d'inserts (12, 12b, 12c) dont les caractéristiques de position de l'axe transversal (O) du moyeu par rapport à l'entraxe (I) de ladite fourche sont différentes d'une paire par rapport à l'autre.

6. Dispositif selon la revendication 5, **caractérisé en ce qu'**il comprend au moins deux paires d'inserts (12, 12b) dans le jeu qui sont configurés avec un décalage dont l'écart (e) et/ou la direction du décalage varie d'une paire à l'autre.

7. Dispositif selon la revendication 5, **caractérisé en ce qu'**il comprend

au moins une première paire d'inserts (12, 12b) possédant un décalage dudit axe transversal (O) du moyeu par rapport à l'entraxe (I) de ladite fourche et, au moins une paire d'inserts (12c) possédant un axe transversal du moyeu (O) qui est aligné par rapport à l'entraxe (I) de ladite fourche.

8. Dispositif selon l'une quelconque des revendications 2 à 6, **caractérisé en ce que** chaque insert (12, 12b, 12c) comprend une portion de connexion tubulaire (21) adaptée à s'insérer complémentairement et de manière coaxiale et amovible dans une portion tubulaire axiale (11) du moyeu.

9. Dispositif selon la revendication 8, **caractérisé en ce que** lesdites portions tubulaires (11, 21) comprennent des moyens de référencement angulaire (24) par rapport au moyeu.

10. Dispositif selon la revendication 9, **caractérisé en ce que** les moyens de référencement angulaires (24) comprennent au moins une portion de méplat (25) qui s'engage complémentairement dans une portion de méplat (26) de la portion tubulaire de réception (11) du moyeu.

11. Dispositif selon l'une quelconque des revendications 8 à 10, **caractérisé en ce que** chaque insert (12, 12b, 12c) comprend des surfaces de support et d'arrêt en rotation (17, 18) qui s'engage dans l'ouverture (9) du brin de fourche.

12. Dispositif selon la revendication 11, **caractérisé en ce que** les surfaces de support et d'arrêt en rotation (17, 18) sont configurées pour positionner l'entraxe (I) de fourche de manière désaxée par rapport à l'axe (I) de la portion de connexion tubulaire (23) de l'insert.

13. Dispositif selon la revendication 12, **caractérisé en ce que** les surfaces (17, 18) comprennent un épaulement (16) adapté pour supporter les surfaces ouvertes (9) d'un brin de fourche.

14. Dispositif selon la revendication 13, **caractérisé en ce que** l'épaulement (16) comprend des portions de surfaces de guidage rectilignes (17,18).

15. Dispositif selon la revendication 11, **caractérisé en ce que** les surfaces de support et d'arrêt en rotation (17, 18) sont configurées pour positionner l'entraxe de fourche (I) de manière alignée par rapport à l'axe (O) de la portion de connexion tubulaire (23) de l'insert.

16. Dispositif selon la revendication 15, **caractérisé en ce que** les surfaces de support et d'arrêt en rotation comprennent une portion de surface de guidage tubulaire.

17. Dispositif selon la revendication 15 ou 16, **caractérisé en ce que** chaque insert (12, 12b, 12c) est traversé par un trou (19) permettant le passage d'un axe de serrage de la roue sur la fourche.

18. Dispositif selon la revendication 17, **caractérisé en ce que** le trou (19) est excentré par rapport à l'entraxe (I) de fourche.

19. Roue (1) avant de cycle **caractérisé en ce qu'**elle comprend un dispositif (3) selon l'une quelconque des revendications précédentes.

20. Cycle **caractérisé en ce qu'**il comprend une roue (1) selon la revendication 19.

21. Méthode de réglage de l'angle de chasse du train avant d'un cycle par un dispositif de réglage comprenant un moyeu pour une roue ; ledit moyeu étant adapté à recevoir des moyens de serrage de la roue sur une fourche du cycle et des moyens de positionnement de l'entraxe et de support de ladite fourche par rapport à l'axe transversal du moyeu ; **caractérisée en ce qu'**elle consiste à connecter sur le corps du moyeu un moyen intercalaire de réglage (30) qui prolonge axialement le moyeu et est configuré pour s'engager dans une ouverture de la fourche de telle manière à assurer à la fois le support de fourche et un positionnement prédéterminé de la position dudit axe transversal du moyeu par rapport à l'entraxe de ladite fourche.

22. Méthode de réglage selon la revendication 21, **caractérisée en ce qu'**elle consiste à choisir ce moyen intercalaire de réglage (30) dans un jeu comprenant plusieurs paires d'inserts détachables et interchangeables par rapport au corps du moyeu et ayant des positions différentes du réglage dudit axe transversal du moyeu par rapport à l'entraxe de ladite fourche desdits moyens de positionnement et de support, puis à associer la paire choisie avec un insert de part et d'autre du moyeu.

**Patentansprüche**

1. Vorrichtung (3) zum Einstellen des Nachlaufs der Vorderachse eines Fahrrads, die eine Nabe (4) für ein Rad (1) umfasst; wobei die Nabe dazu ausgelegt ist, Mittel zum Festspannen des Rads an einer Gabel des Fahrrads und ein Zwischenmittel (30) zum Einstellen der Position des Gabel-Achsabstands (I) bezüglich der Querachse (O) der Nabe aufzunehmen, **dadurch gekennzeichnet, dass** das Einstellzwischenmittel (30) einen Teil der Nabe (4) bildet, der sie axial verlängert, und dazu konfiguriert ist, mit einem Teil (10) der Gabel des Fahrrads in Eingriff zu gelangen, um gleichzeitig die Gabel zu stützen und eine vorbestimmte Positionierung der Position der Querachse (O) der Nabe bezüglich des Gabel-Achsabstands (I) zu gewährleisten.

2. Vorrichtung nach Anspruch 1, **dadurch gekennzeichnet, dass** das Zwischenmittel (30) dazu konfiguriert ist, eine bezüglich des Gabel-Achsabstands (I) versetzte oder ausgerichtete vorbestimmte Position der Querachse (O) der Nabe zu definieren.

3. Vorrichtung nach Anspruch 2, **dadurch gekennzeichnet, dass** das Zwischenmittel (30) mindestens einen Einsatz (12) umfasst, der bezüglich der Nabe (4) abnehmbar und austauschbar ist.

4. Vorrichtung nach Anspruch 3, **dadurch gekennzeichnet, dass** der Einsatz (12) einen Gabelstützteil (15) umfasst, an den ein Öffnungsteil (9) der Gabel angreift.

5. Vorrichtung nach einem der vorhergehenden Ansprüche, **dadurch gekennzeichnet, dass** das Einstellzwischenmittel (30) einen Satz von mindestens zwei Paaren verschiedener Einsätze (12, 12b, 12c) umfasst, deren Positionsmerkmale der Querachse (0) der Nabe bezüglich des Gabel-Achsabstands (I) von Paar zu Paar verschieden sind.

6. Vorrichtung nach Anspruch 5, **dadurch gekennzeichnet, dass** sie mindestens zwei Paare von Einsätzen (12, 12b) in dem Satz umfasst, die mit einem Versatz konfiguriert sind, dessen Abstand (e) und/oder Versatzrichtung von einem Paar zum anderen verschieden ist/sind.

7. Vorrichtung nach Anspruch 5, **dadurch gekennzeichnet, dass** sie Folgendes umfasst mindestens ein erstes Paar von Einsätzen (12, 12b), die einen Versatz der Querachse (O) der Nabe bezüglich des Gabel-Achsabstands (I) aufweisen und mindestens ein Paar von Einsätzen (12c), die eine Querachse der Nabe (O) aufweisen, die bezüglich des Gabel-Achsabstands (I) ausgerichtet ist.

8. Vorrichtung nach einem der Ansprüche 2 bis 6, **dadurch gekennzeichnet, dass** jeder Einsatz (12, 12b, 12c) einen rohrförmigen Verbindungsteil (21) umfasst, der dazu ausgelegt ist, komplementär und auf koaxiale und entfernbare Weise in einen rohrförmigen Axialteil (11) der Nabe eingeführt zu werden.

9. Vorrichtung nach Anspruch 8, **dadurch gekennzeichnet, dass** die rohrförmigen Teile (11, 21) Winkelbezugsmittel (24) bezüglich der Nabe umfasst.

10. Vorrichtung nach Anspruch 9, **dadurch gekenn-** zeichnet, dass die Winkelbezugsmittel (24) mindestens einen abgeflachten Teil (25) umfassen, der komplementär in einen abgeflachten Teil (26) des rohrförmigen Aufnahmeteils (11) der Nabe eingreift.

11. Vorrichtung nach einem der Ansprüche 8 bis 10, **dadurch gekennzeichnet, dass** jeder Einsatz (12, 12b, 12c) Stütz- und Drehungsanhalteflächen (17, 18) umfasst, die in die Öffnung (9) des Schenkels der Gabel eingreifen.

12. Vorrichtung nach Anspruch 11, **dadurch gekennzeichnet, dass** die Stütz- und Drehungsanhalteflächen (17, 18) dazu konfiguriert sind, den Gabel-Achsabstand (I) so zu positionieren, dass er bezüglich der Achse (O) des rohrförmigen Verbindungsteils (23) des Einsatzes von der Achse versetzt ist.

13. Vorrichtung nach Anspruch 12, **dadurch gekennzeichnet, dass** die Flächen (17, 18) eine Schulter (16) umfassen, die dazu ausgelegt ist, die offenen Flächen (9) eines Gabelschenkels zu stützen.

14. Vorrichtung nach Anspruch 13, **dadurch gekennzeichnet, dass** die Schulter (16) Teile geradliniger Führungsflächen (17, 18) umfasst.

15. Vorrichtung nach Anspruch 11, **dadurch gekennzeichnet, dass** die Stütz- und Drehungsanhalteflächen (17, 18) dazu konfiguriert sind, den Gabel-Achsabstand (I) so zu positionieren, dass er bezüglich der Achse (O) des rohrförmigen Verbindungsteils (23) des Einsatzes ausgerichtet ist.

16. Vorrichtung nach Anspruch 15, **dadurch gekennzeichnet, dass** die Stütz- und Drehungsanhalteflächen einen Teil einer rohrförmigen Führungsfläche umfassen.

17. Vorrichtung nach Anspruch 15 oder 16, **dadurch gekennzeichnet, dass** jeder Einsatz (12, 12b, 12c) eine Durchgangsöffnung (19) aufweist, die das Passieren einer Achse zum Festspannen des Rads an der Gabel ermöglicht.

18. Vorrichtung nach Anspruch 17, **dadurch gekennzeichnet, dass** die Durchgangsöffnung (19) bezüglich des Gabel-Achsabstands (I) von der Mitte versetzt ist.

19. Fahrradvorderrad (1), **dadurch gekennzeichnet, dass** es eine Vorrichtung (3) nach einem der vorhergehenden Ansprüche umfasst.

20. Fahrrad, **dadurch gekennzeichnet, dass** es ein Rad (1) nach Anspruch 19 umfasst.

21. Verfahren zum Einstellen des Nachlaufwinkels der Vorderachse eines Fahrrads mittels einer Einstellvorrichtung, die eine Nabe für ein Rad umfasst; wobei die Nabe dazu ausgelegt ist, Mittel zum Festspannen des Rads an einer Gabel des Fahrrads und Mittel zum Positionieren des Gabel-Achsabstands und zum Stützen der Gabel bezüglich der Querachse der Nabe aufzunehmen, **dadurch gekennzeichnet, dass** man bei dem Verfahren ein Einstellzwischenmittel (30), das die Nabe axial verlängert und dazu konfiguriert ist, in eine Öffnung der Gabel einzugreifen, um gleichzeitig die Gabel zu stützen und eine vorbestimmte Positionierung der Position der Querachse der Nabe bezüglich des Gabel-Achsabstands zu gewährleisten, mit dem Nabenkörper verbindet.

22. Einstellverfahren nach Anspruch 21, **dadurch gekennzeichnet, dass** man bei dem Verfahren das Einstellzwischenmittel (30) aus einem Satz auswählt, der mehrere Paare von Einsätzen umfasst, die bezüglich des Nabenkörpers abnehmbar und austauschbar sind und verschiedene Einstellpositionen der Querachse der Nabe bezüglich des Gabel-Achsabstands der Positionier - und Stützmittel aufweisen, und dann das ausgewählte Paar auf beiden Seiten der Nabe mit einem Einsatz verbindet.

**Claims**

1. Device (3) for adjusting the trail of the front wheel of a cycle comprising a hub (4) for a wheel (1) ; said hub being designed to receive means for fastening the wheel to a fork of the cycle and intermediate means (30) for adjusting the position of the dropout axis (I) of the fork relative to the transverse axis (O) of the hub, **characterized in that** said intermediate adjusting means (30) forms a part of the hub (4) which prolongs the latter in the axial direction and is configured to engage with a portion (10) of the fork of the cycle so as to support the fork and at the same time position said transverse axis (O) of the hub in a predetermined position relative to the dropout axis (I) of said fork.

2. Device according to Claim 1, **characterized in that** said intermediate means (30) is configured so as to define a predetermined position of said transverse axis (O) of the hub which is offset relative to or aligned with the dropout axis (I) of said fork.

3. Device according to Claim 2, **characterized in that** said intermediate means (30) comprises at least one insert (12) which is detachable and interchangeable relative to the hub (4).

4. Device according to Claim 3, **characterized in that** said insert (12) comprises a fork support portion (15) against which an opening portion (9) of the fork engages.

5. Device according to any one of the preceding claims, **characterized in that** said intermediate adjusting means (30) comprises a set of at least two different pairs of inserts (12, 12b, 12c) of which the characteristics of position of the transverse axis (0) of the hub relative to the dropout axis (I) of said fork differ from one pair to another.

6. Device according to Claim 5, **characterized in that** the set comprises at least two pairs of inserts (12, 12b) which are configured with an offset, the magnitude (e) and/or the direction of the offset varying from one pair to another.

7. Device according to Claim 5, **characterized in that** it comprises

   - at least one first pair of inserts (12, 12b) having an offset of said transverse axis (O) of the hub relative to the dropout axis (I) of said fork and
   - at least one pair of inserts (12c) having a transverse axis (O) of the hub which is aligned relative to the dropout axis (I) of said fork.

8. Device according to any one of Claims 2 to 6, **characterized in that** each insert (12, 12b, 12c) comprises a tubular connection portion (21) designed to be inserted in a complementary, coaxial and removable manner into an axial tubular portion (11) of the hub.

9. Device according to Claim 8, **characterized in that** said tubular portions (11, 21) comprise means (24) for angular referencing relative to the hub.

10. Device according to Claim 9, **characterized in that** the angular referencing means (24) comprise at least one flattened portion (25) which engages in a complementary manner in a flattened portion (26) of the tubular receiving portion (11) of the hub.

11. Device according to any one of Claims 8 to 10, **characterized in that** each insert (12, 12b, 12c) comprises support and rotation-prevention surfaces (17, 18) which engage in the opening (9) of the fork end.

12. Device according to Claim 11, **characterized in that** the support and rotation-prevention surfaces (17, 18) are configured to position the fork dropout axis (I) so that it is offset relative to the axis (O) of the tubular connection portion (23) of the insert.

13. Device according to Claim 12, **characterized in that** the surfaces (17, 18) comprise a shoulder (16) designed to support the open surfaces (9) of a fork end.

**14.** Device according to Claim 13, **characterized in that** the shoulder (16) comprises straight guide surface portions (17, 18).

**15.** Device according to Claim 11, **characterized in that** the support and rotation-prevention surfaces (17, 18) are configured to position the fork dropout axis (I) so that it is aligned relative to the axis (O) of the tubular connection portion (23) of the insert.

**16.** Device according to Claim 15, **characterized in that** the support and rotation-prevention surfaces comprise a tubular guide surface portion.

**17.** Device according to Claim 15 or 16, **characterized in that** each insert (12, 12b, 12c) has a through-hole (19) which can accommodate a spindle for fastening the wheel to the fork.

**18.** Device according to Claim 17, **characterized in that** the hole (19) is eccentric relative to the fork dropout axis (I).

**19.** Front wheel (1) for a cycle **characterized in that** it comprises a device (3) according to any one of the preceding claims.

**20.** Cycle **characterized in that** it comprises a wheel (1) according to Claim 19.

**21.** Method for adjusting the castor angle of the front wheel of a cycle using an adjusting device comprising a hub for a wheel, said hub being designed to receive means for fastening the wheel to a fork of the cycle and means for positioning the dropout axis and for supporting said fork relative to the transverse axis of the hub, **characterised in that** it consists in connecting, to the body of the hub, an intermediate adjusting means (30) which prolongs the hub in the axial direction and is configured to engage in an opening of the fork so as to support the fork and at the same time position said transverse axis of the hub in a predetermined position relative to the dropout axis of said fork.

**22.** Adjusting method according to Claim 21, **characterized in that** it consists in choosing this intermediate adjusting means (30) from a set comprising several pairs of inserts which are detachable and interchangeable relative to the body of the hub and which have different positions for the adjustment of said transverse axis of the hub relative to the dropout axis of said fork by said support and positioning means, then in associating the chosen pair with an insert on either side of the hub.

Fig. 1

Fig. 2

Fig. 3

*Fig. 4*

*Fig. 5*

10

B

e

B

AV

0

19

17

9

18

15

I

AR

*Fig. 6*

22

4

14

21

23

30

13

12

17

18

19

20

15

O

T

*Fig. 7*

e

12

I T

21

O

23

24

25

*Fig. 8*

*Fig. 9*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2880609
- DE 10229740
- WO 2006056869 A